# EUROPÄISCHE PATENTANMELDUNG

(11) **EP 1 275 286 A1**
(43) Veröffentlichungstag der Anmeldung: **15.01.2003**
(21) Anmeldenummer: 02014479.6
(22) Anmeldetag: 29.06.2002
(51) Int. Cl.: A01D 34/82

(54) **Mähwerk und Fahrzeug**

(30) Priorität: 09.07.2001 US 902077
(71) Anmelder: DEERE & COMPANY, Moline, Illinois 61265-8098 (US)
(72) Erfinder: Buss, Steven Henry, Horicon, WI 53032 (US); Smith, Todd Lynn, Beaver Dam, WI 53916 (US)
(74) Vertreter: Magin, Ludwig Bernhard

(57) **Zusammenfassung**

Mähwerke, welche in Verbindung mit Fahrzeugen zur Rasen-, Garten- und Grundstückspflege verwendet werden, weisen häufig mehrere nebeneinander angeordnete Schneidkammern auf. Das Fahrzeug weist üblicherweise vier Räder auf, wobei das Mähwerk zwischen den Vorder- und Hinterrädern unterhalb des Fahrzeugs angeordnet ist. Wenn sich das Fahrzeug vorwärts bewegt, drücken die Vorderräder das Gras, über das sie fahren, nieder, bevor es durch Messer bzw. Messerbalken des Mähwerks geschnitten werden kann. In dieser Art niedergedrücktes Gras, kann sich häufig nicht wieder aufrichten bzw. durch die Wirkung des rotierenden Messerbalkens angehoben werden, wodurch es nicht oder unvollständig geschnitten wird und ein ungleichmäßiges Schnittbild entsteht.

Es wird ein Mähwerk (18) vorgeschlagen, welches mit einer Leiteinrichtung (42) versehen ist, die Verwirbelungen in einzelnen Schneidkammern (26, 28, 30) derart entgegenwirkt, dass niedergedrücktes Gras durch die Wirkung der rotierenden Messerbalken (32, 34, 36) wieder aufgerichtet und somit vollständig geschnitten werden kann. Darüber hinaus wird ein Fahrzeug (10) zur Rasen-, Garten- und Grundstückspflege mit einem solchen Mähwerk (18) vorgeschlagen.

## Beschreibung

Die Erfindung betrifft ein Mähwerk mit wenigstens einer ersten Schneidkammer und einer zweiten, eine Auswurföffnung aufweisenden Schneidkammer, in denen jeweilige Messerbalken derart drehbar vorgesehen sind, dass sie einen Strom von Schnittgut von der ersten Schneidkammer in die zweite Schneidkammer lenken können, und mit einer an einer Innenwand des Mähwerks vorgesehenen Leiteinrichtung, welche den von der ersten Schneidkammer ausgehenden Strom nach oben ablenkt sowie ein Fahrzeug zur Rasen-, Garten- und Grundstückspflege.

Mähwerke, welche in Verbindung mit Fahrzeugen zur Rasen-, Garten- und Grundstückspflege verwendet werden, weisen häufig mehrere nebeneinander angeordnete Schneidkammern auf. Das Fahrzeug umfasst üblicherweise vier Räder, wobei das Mähwerk zwischen den Vorder- und Hinterrädern unterhalb des Fahrzeugs angeordnet ist. Wenn sich das Fahrzeug vorwärts bewegt, drücken die Vorderräder das Gras, über das sie fahren, nieder, bevor es durch Messer bzw. Messerbalken des Mähwerks geschnitten werden kann. In dieser Art niedergedrücktes Gras, kann sich häufig nicht wieder aufrichten bzw. durch die Wirkung des rotierenden Messerbalkens angehoben werden, wodurch es nicht oder unvollständig geschnitten wird und ein ungleichmäßiges Schnittbild entsteht.

Insbesondere bei Mähwerken mit drei Schneidkammern, beispielsweise entsprechend der US-A-5,860,272, bildet sich darüber hinaus ein Strom von Luft und Gras, welcher durch die Rotation der Messerbalken in den einzelnen Messerkammern hervorgerufen wird. Dieser Strom beginnt üblicherweise in einer ersten Kammer und wird gegen die Innen- bzw. Frontwand der nächsten Kammer(n) geschleudert. Wenn er sich von der mittleren in die der ersten Kammer gegenüberliegende Schneidkammer bewegt, verbindet er sich mit dem dort erzeugten Strom. Die hierdurch erzeugten Verwirbelungen bewirken, dass das Gras in dieser Schneidkammer, insbesondere solches, welches durch ein Vorderrad des Fahrzeugs niedergedrückt wurde, nicht ausreichend angehoben wird, um einen sauberen Schnitt zu erzeugen. Statt dessen wird das Gras durch diese Verwirbelungen noch zusätzlich niedergedrückt.

Die gattungsgemäße JP-A-01 010 913 zeigt ein Mähwerk mit an Leiteinrichtungen, welche einen durch Mähbalken erzeugten Strom von Luft und geschnittenem Gras nach oben ablenken. Die Leiteinrichtungen sind an einer vorderen Innenwand des Mähwerks in einem Übergangsbereich zwischen den Schneidkammern angeordnet. Innerhalb der jeweiligen Schneidkammern kann der von der vorhergehenden Schneidkammer kommenden Strom sich mit dem in dieser Schneidkammer erzeugten Strom wiederum vermischen, wodurch es zu unerwünschten Verwirbelungen und somit zu einem nur ungenügenden Aufrichten von niedergedrücktem Gras in diesem Bereich, insbesondere in der an die Auswurföffnung angrenzenden Schneidkammer, kommen kann.

Das der Erfindung zugrunde liegende Problem wird darin gesehen, dass viele bekannte Mähwerke mit mehreren Schneidkammern und Fahrzeuge zur Rasen-, Garten- und Grundstückspflege, welche mit solchen Mähwerken ausgestattet sind, ein ungleichmäßiges Schnittbild bewirken.

Dieses Problem wird erfindungsgemäß durch die Lehre der Patentansprüche 1 bzw. 9 gelöst, wobei in den weiteren Patentansprüchen die Lösung in vorteilhafter Weise weiterentwickelnde Merkmale aufgeführt sind.

Auf diese Weise wird ein Mähwerk zur Verfügung gestellt, das es auch dem niedergedrückten Gras im Bereich der Vorderräder bzw. des vor einer seitlich an dem Mähwerk vorgesehenen Auswurföffnung angeordneten Vorderrades erlaubt, sich wieder aufzurichten und vollständig geschnitten zu werden, wenn das Fahrzeug über es hinwegfährt. Hierzu weist das Mähwerk eine Leiteinrichtung auf, welche an einer Innenwand des Mähwerks vorgesehen ist und den Strom von der ersten Schneidkammer nach oben ablenkt. Dadurch wird auch eine Verwirbelung, welche aus einem Aufeinandertreffen der Ströme resultiert, abgelenkt.

Durch die Leiteinrichtung wird eine Art Leerraum erzeugt, welcher es dem Gras erlaubt, sich aufzurichten, indem durch die Leiteinrichtung eine Art Pfad für den aus der ersten Schneidkammer kommenden Strom von geschnittenem Gut vorgegeben wird. Da die Leiteinrichtung an die Auswurföffnung angrenzt, wird die Trennung der Ströme an Schnittgut bis zum Auswurf bzw. einem Austreten derselben durch die Auswurföffnung aufrechterhalten.

Es ist denkbar, dass die Leiteinrichtung, insbesondere bei einem Mähwerk, welches mehr als zwei Schneidkammern aufweist, zwischen beliebigen Schneidkammern vorgesehen ist. Insbesondere wenn im Bereich vor diesen Schneidkammern Räder vorgesehen sind, welche das zu schneidende Gras niederdrücken. Besonders wirksam ist eine solche Leiteinrichtung aber, wenn sie angrenzend an die Auswurföffnung des Mähwerks vorgesehen ist, da hier der von den übrigen Schneidkammern angelieferte Strom an Schnittgut besonders groß ist und somit eine besonders negative Wirkung auf das aufzurichtende Gras zu erwarten ist. Darüber hinaus ist die Auswurföffnung üblicherweise im Bereich eines der Vorderräder angeordnet, so dass ein gutes Schnittbild besonders in diesem Bereich stark von der Fähigkeit des Mähwerks abhängt, niedergedrücktes Gras wieder aufzurichten.

Ist die Leiteinrichtung zumindest bereichsweise oberhalb einer Schneidebene der Messerbalken vorgesehen, so kann sie die ankommenden Ströme von Schnittgut aus dem Ansaugbereich des Messerbalkens herausleiten, wodurch eine möglichst geringe Einflussnahme auf das zu schneidende Gut bzw. den in der zweiten Schneidkammer erzeugten Schnittgutstrom hervorgerufen wird.

In einfacher Art und Weise kann die Leiteinrichtung in der Art einer Ablenkplatte ausgeführt sein. Um ein wirksames Leiten des Stroms zu begünstigen, kann die Leiteinrichtung von der ersten Schneidkammer ausgehen und sich bis in die zweite Schneidkammer hinein erstrecken. Ein gutes Leitverhalten ergibt sich darüber hinaus, wenn die Leiteinrichtung an einer Frontwand des Mähwerks vorgesehen ist und von dieser seitlich absteht. Beispielsweise kann sie mit der Frontwand verschraubt oder aber in einfacher Weise verschweißt sein. Eine plattenartige Ausführung ist einfach in der Herstellung und bietet darüber hinaus Pflanzenabschnitten nur eine geringe Angriffsfläche, so dass einem Haftenbleiben und Verklumpen von Pflanzenabschnitten und somit einem Verstopfen entgegengewirkt wird.

Eine möglichst dauerhafte Trennung der Ströme kann dadurch erzielt werden, dass sich die Leiteinrichtung zumindest im wesentlichen über die gesamte Breite der zweiten Schneidkammer erstreckt.

Die Leiteinrichtung kann im Wesentlichen horizontal ausgerichtet sein. Ist sie aber darüber hinaus zumindest bereichsweise rampenartig und hierbei insbesondere nach oben hin ansteigend ausgebildet, so wird der Strom an geschnittenen Pflanzenabschnitten zusätzlich von dem in der zweiten Schneidkammer erzeugten Strom weg geleitet.

Der Einsatz einer derartigen Leiteinrichtung ist insbesondere bei einem Mähwerk mit drei oder auch mehr Schneidkammern vorteilhaft, da durch die höhere Anzahl an Schneidkammer größere Ströme von geschnittenem Gut von einer Kammer in die nächste bzw. in Richtung der Auswurföffnung zu fördern sind.

Wird ein Fahrzeug zur Rasen-, Garten- und Grundstückspflege mit einem solchen Mähwerk ausgestattet, so kann mit diesem Fahrzeug ein verbessertes Schnittbild erzeugt werden, da auch Gras, welches durch Umgebungseinflüsse oder das Fahrzeug selbst niedergedrückt wird, zum Schneiden aufgerichtet werden kann. Bei einem solchen Fahrzeug kann es sich um ein selbstfahrendes Fahrzeug, wie einen Rasentraktor oder einen Aufsitzmäher, aber auch um handgeführte oder handgeschobene Fahrzeuge, wie Rasenmäher, insbesondere Großflächenmäher, etc. handeln.

Hierbei kann das Mähwerk vor oder auch hinter dem Fahrzeug angeordnet sein. Insbesondere vorteilhaft ist ein solches Mähwerk aber, wenn es zwischen den Vorder- und Hinterrädern unterhalb des Fahrzeugs angeordnet ist, da hier die Wirkung der Räder auf das zu mähende Gras verstärkt ins Gewicht fällt.

In der Zeichnung ist ein nachfolgend näher beschriebenes Ausführungsbeispiel der Erfindung dargestellt. Es zeigt:
- Fig. 1: eine Seitenansicht eines Fahrzeugs zur Rasen-, Garten- und Grundstück mit einem unter dem Fahrzeug angeordneten Mähwerk,
- Fig. 2: eine Heckansicht des Mähwerks aus Fig. 1,
- Fig. 3: eine Seitenansicht des Mähwerks, wobei durch eine Auswurföffnung in einem Seitenbereich des Mähwerks eine Leiteinrichtung sichtbar wird,
- Fig. 4: eine perspektivische Ansicht des Mähwerks von unten, wodurch der Blick auf Messerbalken sowie die Leiteinrichtung freigegeben ist und
- Fig. 5: eine Schnittdarstellung entlang der Linie 5-5 aus Fig. 3.

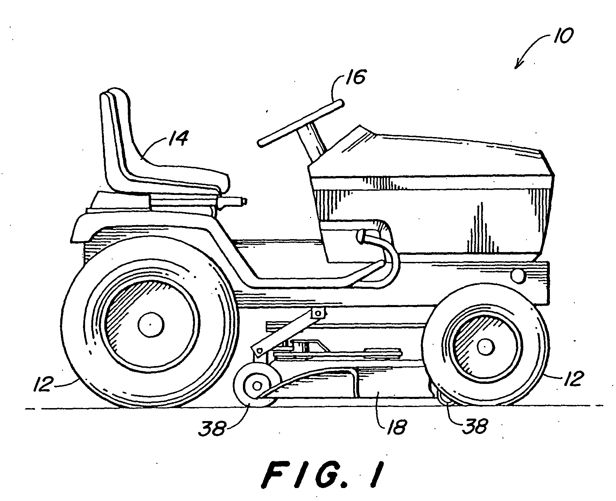

Mit Bezug auf Figur 1 wird ein Rasen- und Gartentraktor bzw. ein Fahrzeug 10 gezeigt, welches sich auf einer Mehrzahl von am Boden angreifenden Rädern 12 abstützt und einen Sitz 14 und ein Lenkrad 16 aufweist. Einen weiteren Bestandteil des Fahrzeugs 10 bildet ein Mähwerk 18 mit mehreren Schneidkammern, welches in der Mitte angeordnet ist.

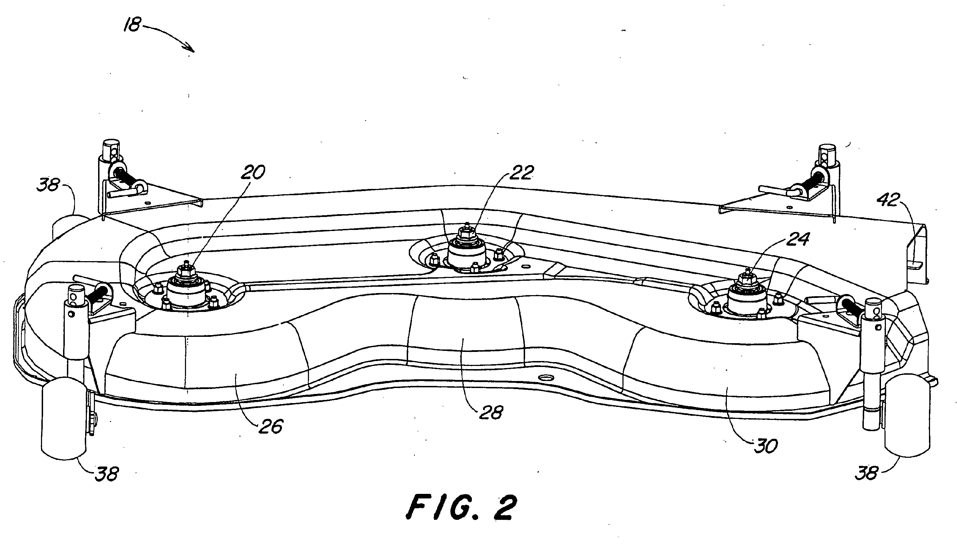

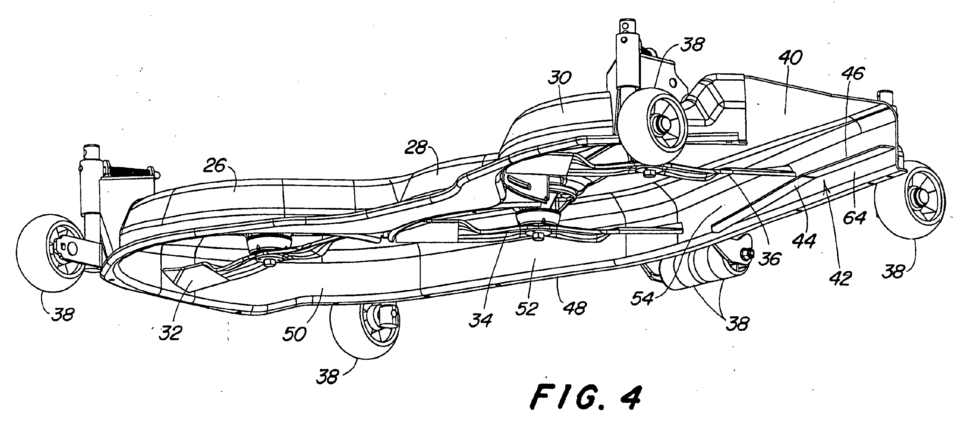

Figur 2 zeigt dieses Mähwerk 18 genauer, welches in Figur 10 als an dem Fahrzeug 10 angebracht dargestellt wird. Das Mähwerk 18 weist drei Schneidspindeln 20, 22 und 24 auf, welche in drei Schneidkammern 26, 28 und 30 entsprechend von links nach rechts angeordnet sind, welche jeweils ein Messer bzw. einen Messerbalken 32, 34, oder 36 darin beherbergen oder umschließen, wie dies in den Figuren 2 und 4 dargestellt wird. An einem vorderen Bereich und jedem der vier Eckbereiche des Mähwerks 18 sind ein Einschneiden-in-den-Untergrund-Verhindernde Räder 38 angebracht, die verwendet werden, um das Mähwerk 18 über unerwartete Höhenunterschiede des Untergrundes, über den das Fahrzeug 10 fährt, zu leiten.

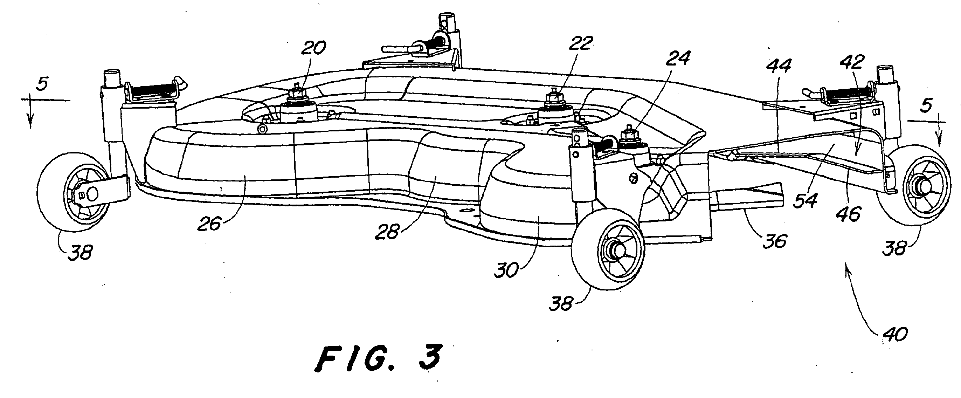

Figur 3 stellt eine Ansicht des Mähwerks 18 zur Verfügung, welche zu der in Figur 2 ähnlich ist, mit der Ausnahme dass das Mähwerk 18 nach rechts gekippt ist. Das Kippen erlaubt es dem Betrachter, durch eine Auswurföffnung 40 bzw. einen Auswurfschacht auf der rechten Seite der rechten Schneidkammer 30 zu sehen, wobei die Auswurföffnung 40 vorgesehen ist, um es geschnittenem Gras zu erlauben, von dem Mähwerk 18 ausgestoßen oder ausgeworfen zu werden. Wie es durch die Auswurföffnung 40 in Figur 3 und auch bei Betrachtung von Figur 4 deutlich wird, kann ersehen werden, dass das Mähwerk 18 eine Ablenkeinrichtung bzw. Leiteinrichtung 42 in Form eines länglichen Streifens aufweist, welcher einen ersten und einen zweiten Bereich 44 und 46 umfasst. Der erste Bereich 44 beginnt leicht oberhalb der Schneidebene des rechten Messerbalkens 36 und setzt sich oberhalb dieser Ebene fort. Der Bereich 44 setzt sich fort bis er auf den Bereich 46 trifft, wobei auch er eine Position oberhalb der Schneidebene des Messerbalkenss 36 aufrecht erhält. Die Leiteinrichtung 42 ist vorzugsweise aus Stahl oder einem ähnlich harten Material hergestellt und ist an der Innenseite der mittleren und rechten Schneidkammern 28 und 30 angebracht.

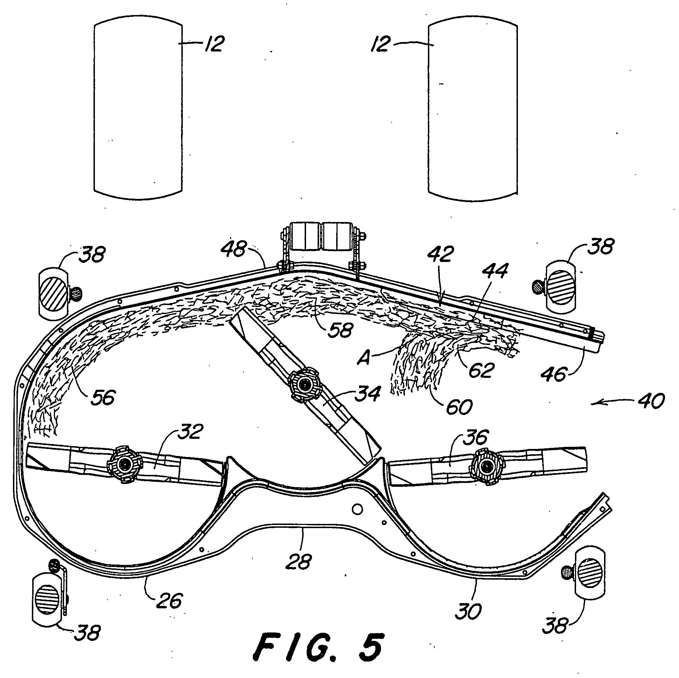

Figur 4 stellt die Unterseite des Mähwerks 18 dar. Durch diese Perspektive kann das Innere jeder der Schneidkammern 26, 28 und 30 gesehen werden. Als Teil davon weist jede der entsprechenden linken, mittleren und rechten Schneidkammern 26, 28 und 30 entsprechend eine Frontwand 50, 52 und 54 auf. Wie dies in Figur 5 dargestellt wird, wird, wenn jeder der drei Messerbalken 32, 34 und 36 rotiert, um sowohl das Gras unterhalb desselben anzuheben und zu schneiden, eine Reihe von entsprechenden Strömen 56, 58, und 60 aus Luft und Gras, wie der, die in Figur 5 verdeutlicht werden, erzeugt und strömt von der entsprechenden Messerbalkenkante. Wenn jeder der Ströme 56, 58 und 60 den entsprechenden Messerbalken 32, 34 und 36 verlässt, folgt er einem gebogenen Pfad, der aus der Rotation der Messerbalken 32, 34 und 36 herrührt. Dieser Pfad bewirkt, dass die Ströme 56, 58 und 60 gegen die Frontwände 50, 52 und 54 geschleudert werden.

Figur 5 betrachtend, verbinden sie sich, wenn sich die Ströme 56 und 58 einem Punkt A nähern, an dem die mittlere und die rechte Schneidkammer 28 und 30 aneinander angrenzen, um einen Strom 62 zu bilden. Der Strom 62 trifft dann auf den Strom 60 aus Luft und Gras, welcher durch die Rotation des rechten Messerbalkens 36 bewirkt wird. Wenn sie sich treffen, verbinden sich die Ströme 62 und 60 und erzeugen einen Verwirbelungsbereich, welcher im Gebiet des Punktes A beginnt und sich über die Breite der rechten Schneidkammer 30 erstreckt. Diese Verwirbelung reduziert die Fähigkeit des rechten Messerbalkens 36 Gras anzuheben und hindert entsprechend Gras, welches zuvor vom rechten vorderen Rad 12 des Fahrzeugs 10 niedergedrückt wurde, daran, angehoben und begradigt zu werden. Der Begriff "begradigt" soll die Fähigkeit des Grases beschreiben, sich aufzurichten und zurück in eine aufrechte Stellung zu biegen, nachdem es durch das Rad niedergedrückt wurde.

Wie es in Figur 4 dargestellt wird, ist die Leiteinrichtung 42 nach oben abgewinkelt und von der Frontwand 54 seitlich nach innen angeordnet, um den verbundenen Strom 62 zu unterbrechen. Dadurch wird die Leiteinrichtung 42 die Verwirbelung, die durch das Aufeinandertreffen oder Verbinden des vereinigten Stroms 62 und des rechten Stroms 60 erzeugt wird, im Wesentlichen umlenken. Die Umlenkung tritt entlang einer rampenförmigen Schräge auf, die durch die Bereiche 44 und 46 gebildet wird, um es so dem Strom 62 zu erlauben, schnell und weich durch das und von dem Mähwerk 18 zu strömen, während der Hauptteil des Stroms 60 unterhalb der Leiteinrichtung 42 abgeworfen wird und schließlich durch den Auswurfschacht 40 austritt. Durch diese Umlenkung ist es Gras erlaubt, welches dem Schneidkreis der rechten Schneidkammer vorangeht, sich in einem Leerraum aufzurichten bzw. zu begradigen, welcher durch die Leiteinrichtung 42 erzeugt wird, wo der Strom 62 im Wesentlichen nicht eingeleitet ist. Nach dem Begradigen kann der rechte Messerbalken 36 das Gras richtig anheben und Schneiden, da der Strom 62 nicht in den Bereich 64 eingeleitet ist. Danach kann der rechte Messerbalken 36 und die durch ihn erzeugte Rotation, dann das geschnittene Gras um einen Bereich an der Innenseite der rechten Schneidkammer 30 herum zu einem Punkt führen, wo der Strom 60 dann unterhalb der Leiteinrichtung 42 geführt und von dem Mähwerk 18 durch den Auswurfschacht 40 ausgeworfen wird.

Durch die gegenwärtige Erfindung wird ein Mähwerk 18 zur Verfügung gestellt, welches Vegetation wirksam durch sein Inneres fördert, um so seine Schneidfähigkeit zu maximieren. Darüber hinaus wird ein Mähwerk 18 zur Verfügung gestellt, welches diese Vegetation wirksam auswirft, sobald sie geschnitten wurde, um ein ansprechendes Schnittbild zu hinterlassen.

Durch die Beschreibung der bevorzugten Erfindung, wird es deutlich werden, dass verschiedenen Modifikationen durchgeführt werden können, ohne den Bereich der Erfindung, wie er durch die folgen Ansprüche bestimmt wird, zu verlassen.

## Patentansprüche

**1.** Mähwerk (18) mit wenigstens einer ersten Schneidkammer (26, 28) und einer zweiten, eine Auswurföffnung (40) aufweisenden Schneidkammer (30), in denen jeweilige Messerbalken (32, 34, 36) derart drehbar vorgesehen sind, dass sie einen Strom (56, 58, 60) von Schnittgut von der ersten Schneidkammer (26, 28) in die zweite Schneidkammer (28) lenken können, und mit einer an einer Innenwand des Mähwerks (18) vorgesehenen Leiteinrichtung (42), welche den von der ersten Schneidkammer (26, 28) ausgehenden Strom (58) nach oben ablenkt, **dadurch gekennzeichnet, dass** die Leiteinrichtung (42) an die Auswurföffnung (40) angrenzt.

**2.** Mähwerk nach Anspruch 1, **dadurch gekennzeichnet, dass** die Leiteinrichtung (42) zumindest im Wesentlichen in der die Auswurföffnung (40) aufweisenden Schneidkammer (30) vorgesehen ist.

**3.** Mähwerk nach Anspruch 1 oder 2, **dadurch gekennzeichnet, dass** die Leiteinrichtung (42) zumindest bereichsweise oberhalb einer Schneidebene der Messerbalken (32, 34, 36) vorgesehen ist.

**4.** Mähwerk nach einem oder mehreren der vorherigen Ansprüche, **dadurch gekennzeichnet, dass** die Leiteinrichtung (42) in der Art einer Ablenkplatte ausgeführt ist, welche sich vorzugsweise von der ersten Schneidkammer (26, 28) bis in die zweite Schneidkammer (30) hinein erstreckt und/oder von einer Frontwand (50, 52, 54) der Schneidkammern (26, 28, 30) bzw. des Mähwerks (18) seitlich absteht.

**5.** Mähwerk nach einem oder mehreren der vorherigen Ansprüche, **dadurch gekennzeichnet, dass** die Leiteinrichtung (42) zumindest bereichsweise bzw. in einem Anfangsbereich rampenartig ausgebildet ist.

**6.** Mähwerk nach einem oder mehreren der vorherigen Ansprüche, **dadurch gekennzeichnet, dass** sich die Leiteinrichtung (42) zumindest im wesentlichen über die gesamte Breite der zweiten Schneidkammer (30) erstreckt.

**7.** Mähwerk nach einem oder mehreren der vorherigen Ansprüche, **dadurch gekennzeichnet, dass** das Mähwerk (18) drei Schneidkammern (26, 28, 30) aufweist, welche vorzugsweise versetzt zueinander angeordnet sind.

**9.** Fahrzeug (10) zur Rasen-, Garten- und Grundstückspflege mit wenigstens einem Mähwerk (18) nach einem oder mehreren der vorherigen Ansprüche.

**10.** Fahrzeuge nach Anspruch 9, **dadurch gekennzeichnet, dass** das Mähwerk (18) unterhalb des Fahrzeugs (10), insbesondere zwischen Vorder- und Hinterrädern (12) des Fahrzeugs (10) angeordnet ist.
